# EUROPEAN PATENT APPLICATION

(11) **EP 1 291 204 A1**
(43) Date of publication of application: **12.03.2003**
(21) Application number: 02018102.0
(22) Date of filing: 13.08.2002
(51) Int. Cl.: B60H 1/00, F28F 9/00

(54) **Assembly of a component of a vehicle air conditioning system to a support structure**

(30) Priority: 07.09.2001 LU 90826
(71) Applicant: Delphi Technologies, Inc., Troy, MI 48007 (US)
(72) Inventor: Neufang, Hans Georg, 54343 Foehren (DE)
(74) Representative: Beissel, Jean

(57) **Abstract**

An assembly (10) of a component (12) of a vehicle air conditioning system to a support structure (14) comprises connection means (30) for connecting a first connection end (18) of the component (12) and a first connection end (24) of the support structure (14). According to an important aspect of the invention, the connection means (30) is slideably mounted on either the first connection end (18) of the component (12) or the first connection end (24) of the support structure (14).

## Description

The present invention relates to an assembly of a component of a vehicle air conditioning system to a support structure, and more particularly to an assembly of a condenser to a radiator.

A condenser of a vehicle air conditioning system comprises two condenser tanks with flow tubes arranged therebetween. Similarly, a radiator comprises two radiator tanks with flow tubes arranged therebetween. Such a condenser is mounted in a generally parallel plane in front of a radiator by fitting the condenser tanks to the radiator tanks.

In a typical prior art assembly, the condenser tank comprises upper and lower wing tabs at its upper and lower edges. These wing tabs are provided with mounting holes, through which fasteners, such as screws, are inserted in order to attach the wing tabs to a bracket mounted on the radiator tank. The installation process for the condenser hence comprises fitting the brackets to the radiator tanks, fitting the wing tabs to the condenser tanks, aligning the condenser such that the mounting holes of the wing tabs align with corresponding holes in the brackets. Fasteners, such as screws are inserted through the upper wing tabs in order to initially retain the condenser in its position. Screws are then inserted through the lower wing tabs and tightened. Finally the screws through the upper wing tabs are tightened in order to complete the assembly.

It is clear that such an installation process is a relatively tedious and time-consuming process. Furthermore, the brackets, wing tabs and screws add to the weight of the condenser-radiator assembly and hence to the overall weight of the vehicle. More importantly however, the above-mentioned assembly is not able to accommodate for manufacturing tolerances of the radiator and/or the condenser. Manufacturing tolerances on manufactured parts, such as condensers and radiators, are quite common and can usually not be avoided. If the mounting holes cannot be aligned, then either the condenser must be matched with another radiator or reworked. This is a very tedious and time-consuming job and should be avoided.

### Object of the invention

The object of the present invention is hence to provide an assembly of a component of a vehicle air conditioning system to a support structure, wherein the assembly is able to accommodate for manufacturing tolerances.

### General description of the invention

In order to overcome the abovementioned problems, the present invention proposes an assembly of a component of a vehicle air conditioning system to a support structure, comprising connection means for connecting a first connection end of the component and a first connection end of the support structure. According to an important aspect of the invention, the connection means is slideably mounted on either the first connection end of the component or the first connection end of the support structure.

The connection means secures the first connection end of the component to the first connection end of the support structure. However, as the connection means is slidably mounted, it provides means for compensating manufacturing tolerances of either or both the component and the support structure. The manufacturing precision hence plays a less important role. No time is lost during the assembly by having to try and compensate for manufacturing tolerances or by having to try and find a component that matches the supporting structure. Furthermore, the slideable clip allows the component to contract or expand freely with respect to the support structure.

The connection means can be slideably mounted on the first connection end of the component. Preferably however, the connection means is slideably mounted on the first connection end of the support structure.

The first connection end of the support structure preferably comprises a guide for slideably receiving the connection means therein. This allows to simplify the assembly of the component to the support structure. The connection means is engaged in the guide and slideably maintained therein. The first connection end of the component is then engaged in the connection means and is slideably connected to the first connection end of the support structure.

The connection means can e.g. comprise a widened base portion and the guide can comprise a channel for receiving the widened base portion therein.

Advantageously, the connection means are clip means comprising a clip arm reaching over the first connection end of the component. The first connection end of the component can engage in such clip means and can thereby be secured to the first connection end of the support structure.

The guide is preferably integrally formed with the first connection end of the support structure.

According to an embodiment of the invention, the first connection end of the component and the first connection end of the support structure are elongate first connection ends, wherein the assembly comprises one or more connection means for connecting the first connection end of the component and the first connection end of the support structure. By providing more than one connection means along elongate connection ends, a more rigid assembly is obtained. There could e.g. be one connection means at each end portion of such elongate connection ends.

Advantageously, the component comprises an elongate second connection end and the support structure comprises an elongate second connection end, wherein the assembly comprises further connection means for connecting the second connection end of the component to the second connection end of the support structure.

The further connection means can be any means like e.g. screw means, or clip means. Preferably however, the second connection end of the component comprises a first connection element and the second connection end of the support structure comprises a second connection element. Either the first connection element or the second connection element comprises a recess therein for receiving the other connection element, and a lateral opening for allowing lateral introduction of the other connection element into the recess. The other connection element comprises a form having a section adapted to be received in the recess, the section having a dimension in a first direction which is smaller than the width of the lateral opening and the section having a dimension in a second direction which is larger than the width of the lateral opening, such that, in a first position, the other connection element can be introduced into the recess through the lateral opening and that, after rotation into a second position of the other connection element within the recess, an interference fit connection is achieved between the first connection element and the second connection element. Such an assembly allows an easy and quick connection of a component to a support structure. Furthermore, apart form the first connection element and the second connection element, there are no additional parts needed, there is hence an overall weight reduction of the assembly.

The recess can be formed in the first connection element, in which case, the second connection element is adapted to be received in the recess. Preferably however, the recess is formed in the second connection element, in which case, the first connection element is adapted to be received in the recess. In order to fix the component to the support structure, the first connection element is introduced into the recess of the second connection element through the lateral opening. The first connection element is then rotated from a first rotational position - the introduction position - to a second rotational position, in which an interference fit connection between the first and second connection elements is achieved. The component is hence securely connected to the support structure. The connection is achieved simply by rotation of the first connection element in the second connection element; i.e. no screws or other fastening means are necessary.

Preferably, the section of the second connection element is generally the same as the section of the recess, the section of the second connection element comprising a deformation in order to obtain the dimension in the first direction. The second connection element hence snugly fits in the recess, whereby a strong assembly is obtained. The deformation ensures that the second connection element can be introduced through the lateral opening of the first connection element into the recess.

The recess, and preferably also the second connection element can be of generally circular cross-section. In such a case, the outer diameter of the second connection element is advantageously substantially equal to the inner diameter of the recess. The deformation of the second connection element can e.g. be a local flattening of the cross-section or a cut-out.

Preferably, the connection means and/or the further connection means are made of synthetic material, which allows for an easy manufacture of the first and second connection ends with integrated connection means. The first and second connection ends can e.g. be formed by moulding processes. The first connection element of the further connection means is preferably integrally formed with the second connection end of the component. The second connection element of the further connection means is preferably integrally formed with the second connection end of the support structure. The assembly is thereby simplified, as no connection elements need to be fixed to the connection ends. Assembly time is thereby also reduced.

The support structure is preferably a vehicle radiator.

The component of a vehicle air conditioning system can e.g. be a condenser, a fan shroud, a charge air cooler or an air-oil cooler.

### Detailed description with respect to the figures

The present invention will be more apparent from the following description of a not limiting embodiment with reference to the attached drawings, wherein
- Fig.1: shows a section view through an assembly of a condenser to a radiator according to the invention;
- Fig.2: shows a section view through the second condenser tank and the second radiator tank of Fig.1;
- Fig.3: shows a perspective view of the clip of Fig.2;
- Fig.4: shows a perspective view of the second radiator tank of Fig.2; and
- Fig.5: shows a section view through the first condenser tank and the first radiator tank of Fig.1.

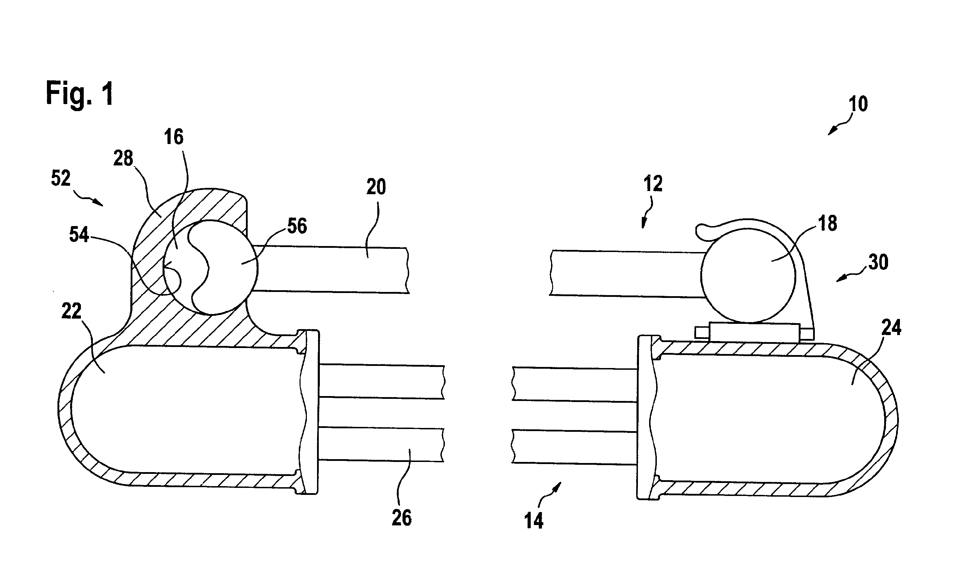

Fig.1 shows an assembly 10 of a condenser 12 to a radiator 14. The condenser 12 comprises a first condenser tank 16 and a second condenser tank 18, with flow tubes 20 arranged therebetween. The radiator 14 comprises a first radiator tank 22 and a second radiator tank 24, with flow tubes 26 arranged therebetween.

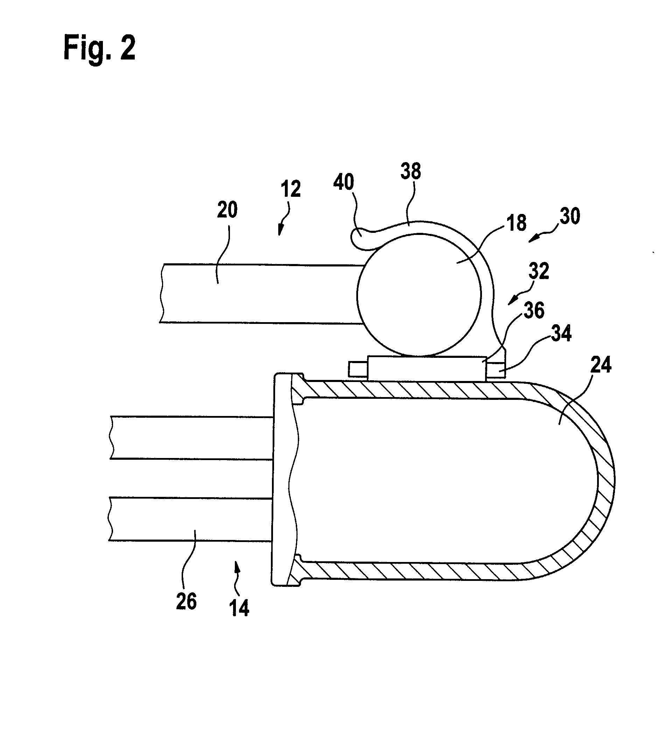

The first radiator tank 22 comprises a bracket 28 for engaging the first condenser tank 16. The connection between the first radiator tank 22 and the first condenser tank 16 will be more closely described later. After the first condenser tank 16 has been connected to the first radiator tank 22, the second condenser tank 18 is connected to the second radiator tank 24 in order to complete the assembly 10. The connection between the second radiator tank 24 and the second condenser tank 18 will now be more closely described by referring to Fig.2, which shows a section view through the second connection end of the radiator-condenser assembly 10.

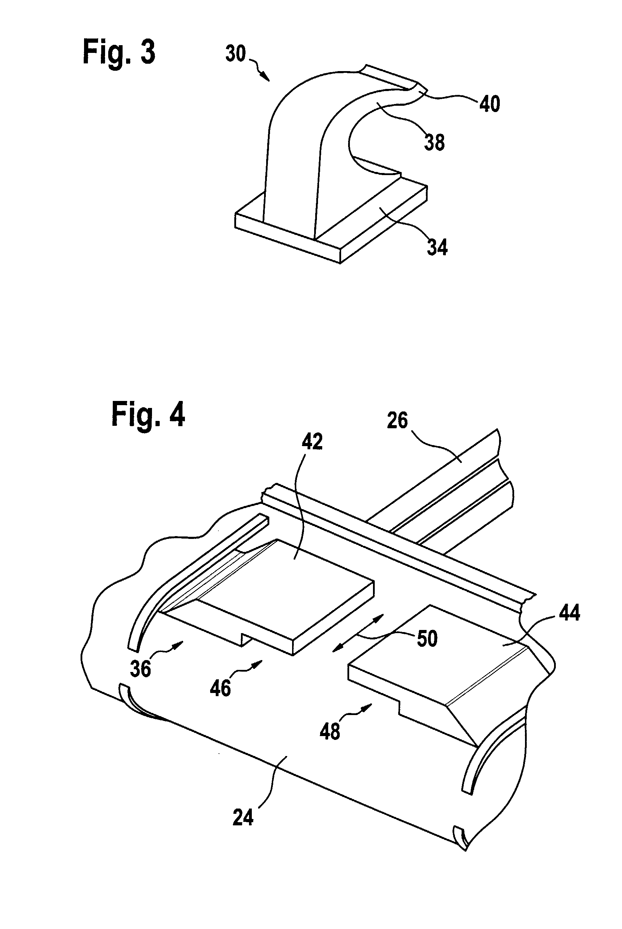

According to the invention, the second condenser tank 18 is connected to the second radiator tank 24 via slideable connection means 30. Preferably, the slideable connection means 30 is a slideable clip 32. The clip 32 and an end portion of the second radiator tank 24 can also be seen in perspective view on Fig.3 and Fig.4.

The clip 32 comprises a base portion 34, which is received in a guide 36 for sliding therein. The clip 32 comprises a clip arm 38 reaching over the second condenser tank 18 and maintaining the latter against the second radiator tank 24. In order to facilitate the sliding of the clip arm 38 over the second condenser tank 18, the front end 40 of the arm clip 38 is bent upwards.

The guide 36 is integrally formed with the second connection end 24 and comprises two guide parts 42, 44. The latter are arranged such that there is an opening therebetween for receiving the clip 32. The guide parts 42, 44 further comprise a channel 46, 48 for receiving the widened base portion 34 of the clip 32. When fitted, the clip 32 can slide back and forth within the guide 36, as indicated by arrow 50.

Such a slideable clip 32 allows to quickly and simply connect the second condenser tank 18 to the second radiator tank 24. More importantly, such a slideable clip 32 allows to compensate for manufacturing tolerances of the condenser 12 and the radiator 14. Moreover, the slideable clip 32 also allows the thermal expansion and contraction of the condenser 12 with respect to the radiator 14.

The further connection means 52 for connecting the first condenser tank 16 to the first radiator tank 22 will now be described in more detail. The further connection means 52 can of cause be slideable (like the connection means 30 between the second condenser 18 tank and the second radiator tank 24). Preferably however, the further connection means 52 is not slideable, so that a tight connection between the first condenser tank 16 and the first radiator tank 22 can be achieved. The further connection means 52 can e.g. be a fixed clip mounted to the first radiator tank 22 for engaging the first condenser tank 16.

According to a preferred embodiment of the invention, the further connection means 52 comprises a first connection element on the first condenser tank 16 for engaging with a second connection element on the first radiator tank 22. The second connection element is a bracket 28 integrally moulded with the first radiator tank 22. The bracket 28 has a recess 54 with a generally circular cross-section therein for receiving the first connection element, i.e. a deformed end portion 56 of the first condenser tank 16. The end portion 56 of the first condenser tank 16 generally has the same cross-section as the recess 54 of the bracket 28 so that the end portion 56 is snugly received in the recess 54.

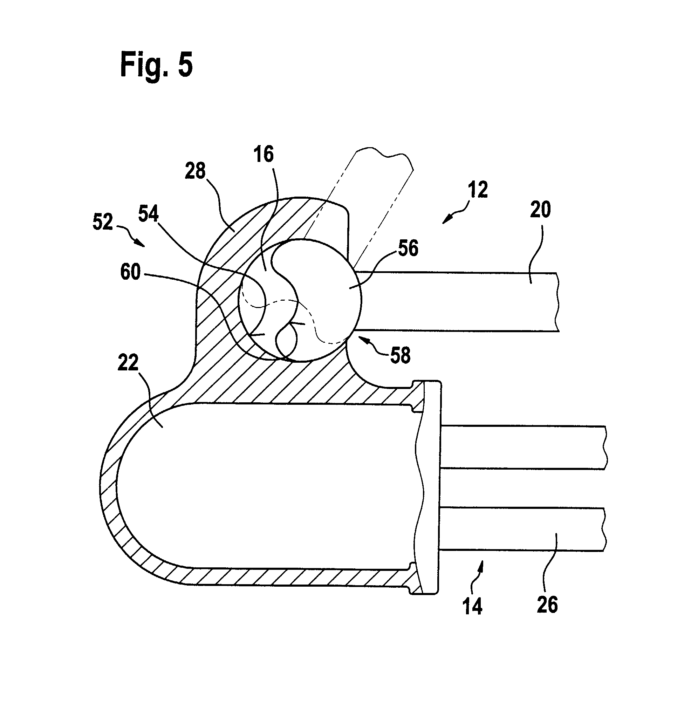

This preferred embodiment of the further connection means 52 can be more closely described by referring to Fig.5, which shows a section view through the first connection end of the radiator-condenser assembly 10.

The first radiator tank 22 comprises two axially spaced brackets 28 (only one of which is shown in the figures) arranged so as to be capable of receiving the two end portions 56 of the first condenser tank 16. These brackets 28 are preferably integrally formed with the wall of the first radiator tank 22. The recess 54 of the bracket 28 has a generally circular cross-section. The bracket 28 further has a lateral opening 58 for enabling the end portion 56 of the first condenser tank 16 to be laterally introduced into the recess 54. As can be seen on Fig.5, the lateral opening 58 is smaller than half the circumference of the recess 54, such that, once the end portion 56 is received in the recess 54 and rotated therein, it cannot escape therefrom.

The section of the end portion 56 of the first condenser tank 16 has a dimension in a first direction, which is smaller than the width of the lateral opening 58, and a dimension in a second direction, which is larger than the width of the lateral opening 58. The smaller dimension of the section can be obtained by a radial deformation 60 of the end portion 56 of the first condenser tank 16.

In order to introduce the first connection element into the recess of the second connection element, i.e. in order to introduce the end portion 56 of the first condenser tank 16 into the recess 54 of the bracket 28 mounted on the first radiator tank 22, the condenser 12 is held substantially perpendicular to the radiator 14 (this position of the condenser 12 is indicated in dotted lines on Fig.5), so that the deformed end portion 56 of the first condenser tank 16 can be introduced into the recess 54 of the bracket 28 through the lateral opening 58. Once the end portion 56 is received in the recess 54, it is rotated within the recess 54 until the condenser 12 lies in a plane, which is generally parallel to the plane of the radiator 14. The radial deformation 60 of the end portion 56 now lies opposite the lateral opening 58, and the large dimension of the end portion 56 prevents the latter from escaping from the recess 54. The end portion 56 of the condenser tank 16 is hence maintained in the bracket 28; only rotation of the condenser 12 around the axis of the first condenser tank 16 is still possible. Such rotation is however prevented once the second condenser tank 18 is attached to the second radiator tank 24.

It will be understood that, although this description deals with an assembly of a condenser to a radiator, other components of a vehicle air conditioning system, like e.g. fan shroud, a charge air cooler or air-oil cooler, can be mounted on a radiator or any other support structure in the same way.

## Claims

1. Assembly of a component (12) of a vehicle air conditioning system to a support structure (14), comprising connection means (30) for connecting a first connection end (18) of said component (12) and a first connection end (24) of said support structure (14)
**characterised in that**
said connection means (30) is slideably mounted on either said first connection end (18) of said component (12) or said first connection end (24) of said support structure (14).

2. Assembly according to claim 1, wherein said connection means (30) is slideably mounted on said first connection end (18) of said component (12).

3. Assembly according to claim 1, wherein said connection means (30) is slideably mounted on said first connection end (24) of said support structure (14).

4. Assembly according to claim 3, wherein said first connection end (34) of said support structure (14) comprises a guide (36) for slideably receiving said connection means (30) therein.

5. Assembly according to claim 4, wherein
said connection means (30) comprises a widened base portion (34), and
said guide (36) comprises a channel (46, 48) for receiving said widened base portion (34).

6. Assembly according to claim 3 to 5, wherein said connection means (30) are clip means comprising a clip arm (38) reaching over said first connection end (18) of said component (12).

7. Assembly according to any of claims 4 to 6, wherein said guide (36) is integrally formed with said first connection end (24) of said support structure (14).

8. Assembly according to any of the previous claims, wherein
said first connection end (18) of said component (12) is an elongate first connection end,
said first connection end (24) of said support structure (14) is an elongate first connection end,
said assembly (10) comprising one or more connection means (30) for connecting said first connection end (18) of said component (12) and said first connection end (24) of said support structure (14).

9. Assembly according to any of the previous claims, wherein
said component (12) comprises an elongate second connection end (16)
said support structure (14) comprises an elongate second connection end (22)
said assembly (10) comprises further connection means (52) for connecting said second connection end (16) of said component (12) to said second connection end (22) of said support structure (14).

10. Assembly according to claim 9, wherein said further connection means (52) are screw means.

11. Assembly according to claim 9, wherein said further connection means (52) are clip means.

12. Assembly according to claim 9, wherein said second connection end (16) of said component (12) comprises a first connection element (56) and said second connection end (22) of said support structure (14) comprises a second connection element (28) and
either said first connection element (56) or said second connection element (28) comprises a recess (54) therein for receiving the other connection element (28, 56), and a lateral opening (58) for allowing lateral introduction of said other connection element (28, 56) into said recess (54),
wherein said other connection element (28, 56) comprises a form having a section adapted to be received in said recess (54), said section having a dimension in a first direction which is smaller than the width of said lateral opening (58) and said section having a dimension in a second direction which is larger than the width of said lateral opening (58), such that, in a first position, said other connection element (28, 56) can be introduced into said recess (54) through said lateral opening (58) and that, after rotation into a second position of said other connection element (28, 56) within said recess (54), an interference fit connection is achieved between said first connection element (56) and said second connection element (28).

13. Assembly according to claim 12, wherein said recess (54) is formed in said first connection element (56).

14. Assembly according to claim 12, wherein said recess (54) is formed in said second connection element (28).

15. Assembly according to claim 14, wherein said section of said first connection element (56) is generally the same as the section of said recess (54), said section of said second connection element (28) comprising a deformation (60) in order to obtain said dimension in said first direction.

16. Assembly according to claims 14 or 15, wherein said recess (54) is of generally circular cross-section.

17. Assembly according to any of claims 14 to 16, wherein said second connection element (28) is of generally circular cross-section.

18. Assembly according to claim 17, wherein the outer diameter of said first connection element (56) is substantially equal to the inner diameter of said recess (54).

19. Assembly according to claims 15 to 18, wherein said deformation (60) of said first connection element (56) is a local flattening of said cross-section.

20. Assembly according to claims 15 to 18, wherein said deformation (60) of said first connection element (56) is a cut-out.

21. Assembly according to any of the previous claims, wherein said connection means (30) and/or said further connection means (52) are made of synthetic material.

22. Assembly according to any of the previous claims, wherein said support structure (14) is a vehicle radiator.

23. Assembly according to any of the previous claims, wherein said component (12) of a vehicle air conditioning system is a condenser, a fan shroud, a charge air cooler or an air-oil cooler.
